# EUROPEAN PATENT APPLICATION

(11) **EP 4 295 700 A2**
(43) Date of publication of application: **27.12.2023**
(21) Application number: 23201714.5
(22) Date of filing: 01.04.2021
(51) Int. Cl.: A23L 13/60

(54) **PROCESS FOR PRODUCING A MEAT ANALOGUE AND APPARATUS THEREFOR**

(30) Priority: 01.04.2020 DE 102020109076; 01.04.2020 DE 102020109068; 01.04.2020 DE 102020109083
(62) Divisional of application: 21717027.3
(71) Applicant: Mars Incorporated, Mclean, VA 22101-3885 (US)
(72) Inventor: SCHREIBER, Marko, 27283 Verden (DE); SCHLEBUSCH, Johannes Paul, 27283 Verden (DE)
(74) Representative: Haseltine Lake Kempner LLP

(57) **Abstract**

The present invention relates to a process for the production of a meat analogue, comprising the steps of:
a) introducing a meat batter comprising protein into a heating unit and heating the meat batter to a temperature above the melting point of the protein to produce a heat-treated product, wherein the heating unit heats the meat batter by Ohmic heating,
b) cooling the heat-treated product by moving through a cooling unit, so that the heat-treated product has a temperature below water boiling temperature at ambient pressure when exiting the cooling unit, and
c) dividing the cooled heat-treated product into pieces

## Description

The present invention relates to a process and an apparatus for producing a meat analogue.

Pet foods have long been manufactured from animal by-products and non-animal derived ingredients to prepare high quality food that provides the pet with the required nutrient profile without competing with the human food demand for meat. As the global population increases the global demand for high protein foods including meat is expected to increase, so an increasing need for pet foods prepared from meat analogues which meet the nutritional needs of pets is expected.

Meat analogues are typically prepared by mixing, chopping and emulsifying a mixture of raw meat ingredients such as beef, pork, lamb and chicken obtained from the muscle tissue and meat by-products. These raw meat ingredients are then mixed with various dry ingredients, for example vegetable by-products, starches, vitamins, minerals, gums, and glutens, to make a meat emulsion. The resulting meat emulsion is then extruded into a continuous slab or sheet that is further transferred into a steam tunnel where the slab/sheet is cooked by exposing it to heat. The cooked slab/sheet is then chopped into pieces, a sauce preparation or the like may be optionally added and the meat analogues packed and processed for sterilization.

WO 2016/055940 A1 discloses a method for producing non-meat food products having appearance and texture of cooked meat, comprising mixing dry ingredients comprising vegetable proteins with wet ingredients comprising at least one of water or oil to form a non-meat dough, heating the non-meat dough under pressure at a temperature from 110-180°C, and gradually cooling the heated non-meat dough to form a non-meat food product. EP 1 231 846 B2 discloses a method for producing a meat emulsion product comprising the steps of forming a meat emulsion containing at least 29% by weight protein, 4-7% by weight fat and 49-53% by weight moisture; comminuting and heating the meat emulsion to a temperature of 140-154°C; and introducing the emulsion into a processing zone and subjecting the meat emulsion to a pressure of 1380-2415 kPa; and discharging the meat emulsion from the zone. According to WO 2016/055940 A1 and EP 1231 846 B2, heating is a one-step operation to achieve the final temperature of 180°C and 154°C, respectively. WO 2015/172002 A2 discloses a method for producing meat-like chunks, wherein a meat slurry is introduced to a first scraped heat exchanger at a pressure of at least 1241 kPa and heat is applied to the first scraped heat exchanger to produce a first heat-treated meat product having a temperature of 38-66°C, and the first heat-treated meat product is then transferred to a second scraped heat exchanger and heat is applied to the second scraped heat exchanger to produce a second heat-treated meat product having a temperature of 60-85°C. The second heat-treated meat product is then transferred to a steam tunnel for further processing. This process does not provide a sufficient meat-like fibrous structure of the chunks.

DE 10 2016 125 870 discloses a process for the production of meat analogues, wherein meat batter comprising protein is heated above the melting temperature of the protein by means of scraped surface heat exchangers (SSHE). Such a process is operated using SSHEs in which a shaft equipped with metal blades is rotated on a hard chromed surface to remove the hottest product phase from the hard chromed surface and replace it with colder product. A risk has been identified due to the metal to metal contact at high rotation speeds that metal slivers can be created through the wear of the blades on the outer surface, due to mechanical forces. It has been also found that the heat-up of the meat batter may be further improved, with avoidance of any shear, to result in better product performance, for example with regard to color, smell or taste. Also, when using SSHEs, time-temperature profile could be further improved, start and stop of the system can be improved. There might be also some efforts regarding cleaning and waste disposal from SSHEs. In this regard, a risk has been identified that there could be areas in the process where material flow is low or stalled, so that buildup of product can occur, especially when the material flow is stopped for a period of time. Jaeger, H., et al: Food Science and Technology, Vol. 55, 2016 describes the use of ohmic heating in the treatment of foods using high energy density from 0.5 to 2 A/m².

The study of heat transfer into foods, such as meat batters, is of great importance, because heat processing is the most common technique used for preservation today. Electrical and electro/thermal methods such as microwave, Ohmic heating and pulsed electric field are very interesting processes in this regard. Ohmic heating is a direct method as electrical current passes through materials to heat them. Ohmic heating occurs when an electric current is passed through food, resulting in a temperature rise in the product due to the conversion of the electrical energy into heat (Joule effect). As most foods, such as meat batters, contain ionic components such as salts and acids, electrical current can pass through the foods and may generate heat inside them. Ohmic heating occurs when an alternating current is passed through a food that is electrically conductive. Heat generation takes place volumetrically. The electrical energy is directly converted into heat causing a temperature rise. This system is comparable to an electrical circuit, which is comprised of a resistance and a source of voltage and current. The food product acts as the resistance when placed between two electrodes and the current passes through it.

The invention provides novel processes for the production of meat analogues. These processes allow time-temperature profiles that can be carefully controlled while heating meat batters in an Ohmic heating unit, which provides good product performance, for example with regard to color, smell or taste. Additionally, these processes allow faster heat-up of the meat batter and, especially the use of renewable energies. This improvement is especially based on the modularity of the Ohmic heating unit.

WO2015/020873 discloses methods of producing an extruded protein product using a cooling die with diameter of 130 to 1000mm.Currently authentic muscle meat analogue chunks can be prepared using protein melting in the range up to 160°C. The cooling down is currently achieved using rectangular shaped cooling dies in rectangular shape, which creates a short-fibrous structure. There is a need for a method of preparing meat analogues which provides increased control of the cooling in order to design improved meat analogues, ideally methods which are highly controllable and which increase the design flexibility in the factory setting. The invention provides novel processes for the production of meat analogues. These processes allow cooling down in a special designed pipe with external and internal cooling, creating symmetric/co-centric fibrous/filament design longer and more authentic than the current one. The segmented pipe design offers the opportunity for dedicated cooling parameters along the cooling way and by this a wider range of possible structures. This is mainly applicable for real and authentic look like meat and fish chunks. This can be used to partially replace real fish pieces (sustainability). Current asset cost for example in the melt technology chunk making can be reduced significantly. The operating and product design range (texturization) can be widened.

The present invention provides a process for the production of a meat analogue, comprising:
a) introducing a meat batter comprising protein into a heating unit and heating the meat batter to a temperature above the melting point of the protein to produce a heat-treated product, wherein the heating unit optionally heats the meat batter by Ohmic heating,
b) cooling the heat-treated product by moving through a cooling unit, so that the heat-treated product has a temperature below water boiling temperature at ambient pressure when exiting the cooling unit,
c) dividing the cooled heat-treated product into pieces, and
d) and optionally d) tearing the pieces by passing the pieces through a roll nip (14) between a pair of counter-rotating cylindrical rolls (2, 4) having parallel axes of rotation (10, 12), a plurality of projections (16) being arranged on an outer surface of at least one of the rolls (2, 4).

The heating unit suitably comprises at least two sections, wherein the sections are connected in series and each comprises at least one module, which modules are operable by Ohmic heating. The heating unit may comprises two sections, wherein the first section into which the meat batter is firstly introduced comprises from 1 to10 modules, and the second section, to which the meat batter is transferred from the first section, comprises from 1 to 7 modules, wherein the modules in the sections are connected in series. In certain embodiments of the invention at least one holding pipe is provided between the first and the second section and/or after the second section, and wherein no electrical energy is applied to this holding pipe. In further embodiments 60-70% of total electrical power to be applied to the meat batter in the process is suitably applied in the first section, and 30 to 40% of the total electrical energy to be applied to the meat batter in the process is applied in the second section. Heating in step a) is suitably carried out with electrodes applying an electrical current density of 100-5,000 A/m², current/surface area of the electrodes, as an average electrical current density over the heating unit.

Step b) may optionally comprise externally and internally cooling the heat-treated product by moving through a cooling pipe (34) of a cooling unit (30), so that the heat-treated product has a temperature below water boiling temperature at ambient pressure when exiting the cooling unit (30) and wherein the internal cooling comprises cooling by way of an inner cooling lance (40) co-centric to the outer cooling pipe (34) and wherein the external cooling optionally comprises outer jacket cooling.

The product temperature at the inlet of the cooling pipe (34) is suitably in a range of 145-170°C. The product temperature at the outlet of the cooling pipe (34) is suitably in a range of 70-100°C. The pressure of the product at the inlet of the cooling pipe (34) is suitably in a range of up to 40 bar max. The product throughput is in a range of 15-500 kg/h and preferably about 250 kg/h. The product viscosity at the inlet of the cooling pipe (34) is suitably in a range of about 12 Pas. The the viscosity of the product at the outlet of the cooling pipe (34) is > 50 Pas or > 150 Pas or > 1000 Pas or > 5000 Pas or > 100000 Pas at temperature < 100°C.

The invention also provides apparatus for the production of a meat analogue comprising:
i) a heating unit operable to heat a meat batter comprising protein,
ii) a cooling unit located downstream the heating unit and operable to cool down heat-treated product obtained from the heating unit below water boiling temperature at ambient pressure when exiting the cooling unit, and
iii) a dividing unit located downstream the cooling unit suitable for dividing cooled down heat-treated product obtained from the cooling unit into pieces
and optionally v) a tearing unit (1) for tearing the pieces, the tearing unit (1) comprising:
a pair of rotatable rolls (2, 4) having parallel axes of rotation (10, 12) arranged at a preset distance (d) of each other,
the distance (d) defining a width (w) of a roll nip (14) between the rolls (2, 4),
each roll (2, 4) being coupled with a motor (6, 8) for rotating the rolls (2, 4) in a counter-rotating movement,
a plurality of projections (16) being arranged on an outer surface of a first roll (2) of the pair of rolls (2, 4),
a control unit for controlling the heating unit, the cooling unit, the dividing unit and the tearing unit (1).

The invention further provides a tearing apparatus for tearing pieces of meat analogue comprising:
a pair of rotatable rolls (2, 4) having parallel axes of rotation (10, 12) arranged at a preset distance (d) of each other,
the distance (d) defining a width (w) of a roll nip (14) between the rolls (2, 4),
each roll (2, 4) being coupled with a motor (6, 8) for rotating the rolls (2, 4) in a counter-rotating movement,
a plurality of projections (16) being arranged on an outer surface of each roll (2, 4), the projections (16) being formed as cones, truncated cones, pyramids or truncated pyramids,
the projections (16) being arranged in rows parallel to the axes of rotation (10, 12) and along circumferential lines,
the rolls (2, 4) being positioned in an axial direction such that between each two adjacent circumferential lines of projections (16) of one roll (2), a circumferential line of projections (16) of the opposing roll (4) is positioned. Apparatus as claimed in claim 7 or claim 8 comprising a means for adjusting the distance (d) between the axes of rotation (10, 12) in order to adjust the width (w) of the roll nip (14).

Suitably each roll (2, 4) is derivably connected to a separate motor (6, 8), each motor (6, 8) being operable to drive the rolls (2, 4) to rotate at equal or different.

The cooling unit (30) may suitably comprise a cooling lance (40) co-cencentric to the cooling pipe (34) for internal cooling and optionally wherein the cooling pipe (34) has a circular cross-section. The cooling pipe (34) is suitably a double-wall pipe for outer jacket cooling, wherein the outer diameter of the double-wall pipe is optionally in a range of 40 to 70mm, wherein the inner diameter of the double-wall pipe is optionally in a range of 35 to 60mm and preferably about 50 mm. In preferred embodiments the cooling lance (40) is shorter than the cooling pipe (34). Optionally the cooling lance (40) comprises a coolant supply passage (43) and a coolant return passage (45) that are in fluid communication and a coolant inlet (42) in fluid communication with the coolant supply passage (43) and a coolant outlet (44) in fluid communication with the coolant return passage (45).

The cooling pipe (34) suitably has a circular cross-section. The cooling pipe (34) suitably has a length in a range of 3 to 10 m. The cooling pipe (34) is suitably a double-wall pipe for outer jacket cooling. The outer diameter of the double-wall pipe is suitably in a range of 40 to 70mm. The inner diameter of the double-wall pipe is suitably in a range of 35 to 60mm and preferably about 50 mm. The double-wall pipe suitably comprises a helicallyshaped guiding element (48) in the space between the two walls for guiding a coolant. The cooling lance (40) is preferably shorter than the cooling pipe (34). The cooling lance (40) suitably comprises a coolant supply passage (43) and a coolant return passage (45) that are in fluid communication and a coolant inlet (42) in fluid communication with the coolant supply passage (43) and a coolant outlet (44) in fluid communication with the coolant return passage (45).

The present invention also provides the use of the process and/or apparatus of the invention in a process of preparing pet food.

Further embodiments of the inventive process and the inventive apparatus may be taken from the dependent claims

The apparatus for producing a meat analogue comprises in one embodiment further equipment to prepare the meat batter and to introduce the meat batter into the heating unit. For example, a mixer for mixing the ingredients of the meat batter and an infeed pump to transfer the meat batter into the heating unit may be provided.

The process for producing a meat analogue according to the invention may therefore additionally comprise the steps of mixing ingredients of the meat batter and feeding the prepared meat batter into the heating unit by means of, for examples, infeed pumps. The process preferably operates in a closed system under a minimum pressure of about 7-8 bar. This avoids steam formation during heating a moist meat emulsion up to about 170°C. Steam formation within the process may negatively influence texture formation. Hence, the critical heating process in the heating unit as well as the cooling process and the cooling unit are both separated from the infeed by respective pumps, for example, rotating lobe pumps. The apparatus may further comprise a process pump between the heating unit and the cooling unit to further support conveying the heat-treated meat batter to the cooling unit. This ensures managing the internal pressure as well as managing the increasing viscosity during processing. The pumps may ensure, if required, delivering the higher pressures required for conveying the heat-treated meat batter through the cooling unit where it turns into a solid. These pumps are preferably used to manage starts after short line stops.

### a) Heating step

In the heating step a), the meat batter may be heated to a temperature above the melting point of the protein in just one single and continuous heating unit. When, sections and a number of modules are used, these modules may be adjusted to the desired power distribution per heating step to create an optimum profile. The heating unit may suitably comprise a temperature control system to constantly monitor the temperature at infeed, outfeed and within the heating unit, i.e. also at the individual sections and modules. Additionally, the flow rate may be monitored, and the specific heat of the meat batter to calculate the electrical power needed for the system.

Ohmic heating step: The design of an Ohmic heating unit may consist of electrodes that contact the meat batter, whereby electricity is passed through the meat batter using a variety of voltage and current combinations. In the Ohmic heating unit design, a power supply (generator) is required to produce the electricity. Electrodes connected to the power supply have to be in physical contact with the meat batter in order to pass the electric current through.

When used herein the term "operable by Ohmic heating" is to be understood in that the heating unit is provided with equipment, so that Ohmic heating may be carried out. For example, a power generator for generating sufficient electricity (electrical current density) is provided and connected with the electrodes. Further, there is a physical contact of the meat batter and the electrodes. The term "operable by Ohmic heating" may suitably be considered to mean "operated by Ohmic heating" when used to describe process steps or "comprising an Ohmic

In the heating step it is advantageous that the meat batter is as homogenous as possible in order to apply electrical power throughout the meat batter in an easy and homogeneous manner. The electrical current density to be applied to the meat batter may be adjusted as desired to achieve the effect required. In one embodiment, the electrical current density to be applied in the heating unit may be from about 100 to about 5,000 Ampere per square meter of the electrode surface (100-5,000 A/m²), suitably from about 100 to about 4,000; from about 100 to about 3,000; from about 100 to about 2,000; from about 100 to about 1,000; from about 100 to about 900; from about 100 to about 800; from about 200 to about 5000; from about 200 to about 4000; from about 200 to about 3000; from about 200 to about 2000; from about 200 to about 1000; from about 200 to about 900; from about 200 to about 800; from about 300 to about 5000; from about 300 to about 4000; from about 300 to about 4000; from about 300 to about 3000; from about 300 to about 2000; from about 300 to about 1000; from about 300 to about 900; from about 300 to about 800, from about 400 to about 5,000; from about 400 to about 4,000; from about 400 to about 3,000; from about 400 to about 2,000; from about 400 to about 1,000; from about 400 to about 900; from about 400 to about 800; from about 500 to about 5000; from about 500 to about 4000; from about 500 to about 3000; from about 500 to about 2000; from about 500 to about 1000; from about 500 to about 900; from about 500 to about 800; from about 600 to about 5000; from about 600 to about 4000; from about 600 to about 4000; from about 600 to about 3000; from about 600 to about 2000; from about 600 to about 1000; from about 600 to about 900; from about 600 to about 800. Within these electrical current density ranges, it was found that the meat batter may be safely heated, and no electrode fouling or any other defects have been observed. The electrical current densities as given above define a mean current density when measuring the electrical current densities over the heating unit including, optionally, sections and modules. In the heating step a), the meat batter may be heated to a temperature above the melting point of the protein in just one single and continuous heating unit. In case, sections and a number of modules are used, these modules may be adjusted to the desired power distribution per heating step to create an optimum profile. The heating unit may comprise a temperature control system to constantly monitor the temperature at infeed, outfeed and within the heating unit, i.e. also at the individual sections and modules. Additionally, the flow rate may be monitored, and the specific heat of the meat batter to calculate the electrical power needed for the system.

When used herein the term "meat analogue" refers to a meat substitute suitable for use in pet or animal food as a meat replacement, which may suitably be a "chunk". The meat analogue may have sensory attributes similar to cooked meat. Meat analogues may be incorporated into pet or human food products. They are particularly suitable for inclusion in wet pet food products of all types, e.g. they can be incorporated into pates, loaves and chunk in sauce formats. They are particularly suitable for inclusion in "chunk in sauce" products, e.g. "chunk and gravy", "chunk and jelly" or `chunk and mousse' products. The meat analogues are typically between about 13 mm and about 20 mm in length along the longest dimension. They may suitably have a nutrient composition of about 45 to about 65% moisture, preferably about 50% to about 61% moisture, about 25% to about 36% protein, about 4% to about 13% fat, and about 1% to about 3% ash.

In the context of the present invention, "meat batter" comprises both meat containing batters and batters being free of meat and being based on other proteins. When used herein the term "meat analogue" refers to a meat substitute suitable for use in pet or animal food as a meat replacement, which may suitably be a "chunk". The meat analogue may have sensory attributes similar to cooked meat. Meat analogues may be incorporated into pet or human food products. They are particularly suitable for inclusion in wet pet food products of all types, e.g. they can be incorporated into pates, loaves and chunk in sauce formats. They are particularly suitable for inclusion in "chunk in sauce" products, e.g. "chunk and gravy", "chunk and jelly" or 'chunk and mousse' products. The meat analogues are typically between about 13 mm and about 20 mm in length along the longest dimension. They may suitably have a nutrient composition of about 45 to about 65% moisture, preferably about 50% to about 61% moisture, about 25% to about 36% protein, about 4% to about 13% fat, and about 1% to about 3% ash.

When used herein the term "meat batter" refers to a thick mixture of water and other substances derived from raw materials, such as meat or meat by products. They are not emulsions such as mayonnaise or milk, but are dispersions of fat particles and air bubbles in a complex phase composed of water, solubilized meat protein, cellular components and other ingredients.They may also be referred to as a meat emulsion or a meat slurry. These terms are well understood in the art and are used interchangeably. Typically they comprise a continuous phase which is an aqueous medium containing soluble proteins, soluble muscle constituents, segments of muscle fibers, connective tissue fibers, bones etc. and optionally materials of plant origin materials such as proteins and/or starches and/or fibres and/or minerals. Meat batters/emulsions/slurries may also contain further additives as is common in the art. Meat batters can be obtained by known methods, e.g. by fragmenting frozen meat obtained from animal skeletal muscle to generate meat fragments which may be blended with water, one or more binding agent(s), and optionally other ingredients. Frozen meat is suitably chopped, crushed and ground to create a meat batter/slurry/emulsion. Typically the ground meat slurry will be size-reduced by use of a system comprising rotating and static elements, for example by means of rotating knives on die plates, and finally passes through a hole of characteristic diameter. In various embodiments, the maximum diameter of the hole is about 0.5 mm, about 1 mm, about 2 mm, about 3 mm, about 4 mm, about 5 mm, about 6 mm, about 7 mm, about 8 mm, about 9 mm, and/or about 10 mm. The resulting finer ground meat emulsion can suitably be transferred to a mixer where water, dry ingredients (e.g. protein powder of vegetable origin) and liquid ingredients (e.g. colourants) can be optionally added to provide a meat batter.

When used herein, the term ' protein' refers to one or more proteins suitably provided by one or more of the raw materials. The protein may suitably be animal proteins, vegetable proteins or any combination thereof. Animal proteins include any protein of animal origin (including vertebrate and invertebrate proteins), e.g. proteins derived from mammals, fowl, fish and insects. Examples of suitable animal proteins include those derived from chicken, turkey, beef, lamb, pork, venison, buffalo, duck, kangaroo, shell fish, crustaceans, salmon, tuna, whitefish etc. They may suitably be derived from muscle meat, organs, tendons, bone etc. Further suitable animal proteins include milk or egg derived proteins. Suitable vegetable proteins include proteins derived from wheat gluten, soy protein isolate, maize, pea, rice, peanuts, hemp, cotton seed, lupine, potato etc. or blends thereof. Also proteins based on bacteria funghi, yeast and algae may be used. The proteins may be in any suitable form, e.g. isolated or partially isolated; concentrated; ground etc. In one embodiment, the meat analogue may be on a fully vegetarian basis.

In some embodiments the meat batter is heated in the first section to a temperature of about 90°C to about 120°C; about 100°C to about 120°C; about 90°C to about 115°C; about 100°C to about 115°C; about 90°C to about 110°C; or about 100°C to about 110°C. In further embodiments the heat-treated product is heated in the second section to a temperature of about 140°C to about 170°C; about 145°C to about 170°C; about 150°C to about 170°C; about 155°C to about 170°C; about 160°C to about 170°C; about 140°C to about 165°C; about 145°C to about 165°C; about 150°C to about 165°C; 155°C to about 165°C or about 160°C to about 165°C.

The residence time of the meat batter in the first section may be below 180 seconds, the residence time of the meat batter in the second section of the heating unit maybe below 110 seconds. In the first section, the meat batter maybe heated above the denaturation temperature of the protein, while the meat batter may be heated above the melting temperature of the protein in the second section. The first section may be followed by a holding pipe for temperature homogenization. A second holding pipe may be provided after the second section to, again, improve temperature homogenization in the heat-treated product. The split into two distinctive heating steps within the first and second sections may improve the process stability. The number of modules in the first and section sections may be the same or different.

In some embodiments, the pressure in the heating unit, the pressure in the first section and the pressure in the second section exceeds the water vapor pressure at the respective local temperature. The pressure in the heating unit may be in the range between 800 to about 4,000 kPa. In some embodiments the pressure in the first section and the pressure in the second section are substantially equal and are preferably in a range between about 800 to about 2000 kPa; about 800 to about 1,800 kPa; about 1,000 to about 1,800 kPa; about 1,000 to about 1,500 kPa; more preferably between about 1000 kPa to about 1250 kPa. This pressure range allows efficiency of energy transfer. The heat-treated product may suitably be divided into pieces at a temperature of about 40°C to about 100°C in the center of the product; about 40°C to about 70°C; about 50°C to about 80°C; about 50°C to about 70°C.

The meat batter utilized in the inventive process typically comprises a mixture of proteins having differing denaturation temperatures and melting temperatures. Preferably, at least 35wt-%, 40wt-%, 50 wt-%, 60 wt-%, 70 wt-%, 80 wt-% or 90 wt-% of protein, based on the total amount of protein in the meat batter, is melted. Most preferably substantially all the protein is melted. In one embodiment, it is only necessary that enough protein is melted to form a cohesive and continuous outer phase of the heat-treated product that may carry nonmelted other proteins, fibers, bone particles, etc.

When used herein, the term "denaturation" related to proteins means that denatured proteins have lost their three-dimensional structure. Denatured proteins may exhibit a wide range of characteristics, from loss of solubility to protein aggregation. Someone skilled in the art is well aware what is to be understood under a denatured protein. When used herein, the melting point of a protein is the temperature at which it changes state from solid to liquid at the pressure selected. The denaturation temperature of a protein may be measured by methods well known in the art, for example by use of a rubber process analyzer. As a rubber process analyzer, a respective analyzer from TA Instruments, Wetzlar, Germany, Model RPA Elite, may be used, measuring viscoelastic properties of protein/moisture samples pursuing a temperature sweep analysis delivering a protein melting range. Concerning the melting range for the proteins used, rheological measurements maybe utilized, wherein the melting range is the temperature range, where after an increase in viscosity due to the denaturing (unfolding) of the proteins a drop of viscosity is observed indicating a change from a suspension of solids into a homogeneous liquid phase. Also the melting point of a protein may be measured by methods well known in the art, for example by differential scanning calorimetry (DSC) or rheology. For rheology, viscosity measurement can be done in a closed and pressurized cell to avoid steam formation at temperatures exceeding 100°C. Suitable rheometer is Anton Paar Rheometer MCR 301 equiped with pressurized and magnetically coupled cell CC25/PR150/SS equipped with a measuring bob, B-CC25/PR/Ti and performing a temperature sweep at a constant shear rate. For individual proteins, respective data of denaturation temperature and melting point can be also obtained from scientific literature.

### b) Cooling step

The heat treated product is suitably a layered and/or aligned product formed as the material cools in step (b). As the melted material solidifies a layered fibrous meat analogue structure is formed. Steps (b) and/or step (c) is optionally performed under pressure of about 800-4000 kPa, so that the protein solidifies step by step in layers which create a fibrous structure. Thus, in the cooling step the aggregate of the protein changes from a liquid melt to a solid phase.

In other words, the protein setting is the controlled solidification of melted protein while being in flow. The formation of meat-like fibers is the direct result of an appropriately controlled cooling. As described above, if the heat-treated product has been heated above the melting point of the protein, at least part of that protein (or the protein mixture) is said to be melted. Once proteins have been brought to the melted state, upon cooling, they will solidify into a strong, elastic mass with leather-like properties. This mass does not easily re-melt and cannot be easily pumped mechanically. Thus, it is important that, once melted, protein is maintained in motion and cooled in a cooling unit from which solidified material can be continuously discharged.

The heat treated product exits the heating unit at e.g. 140°C to about 170°C and is cooled to a temperature below water boiling temperature in a cooling unit, e.g. using a tubular cooling zone cooled with water. Also, a rectangular shaped cooling die design may be used. The product is transferred through the unit, e.g. along a cool surface, and forms into a layered fibrous structure as the melt solidifies (as the product temperature drops below its melting point). This occurs under pressure and in motion and the protein solidifies step by step in layers to create fibrous structures.

### c) Dividing step

When used herein the term "dividing" refers to any operation to comminute the heat-treated product, for example cutting, ripping, tearing, squeezing, hammer milling, etc. This may suitably be performed using a grid or rotary cutting device. Dividing may be performed in one or more steps, for example a first cutting may be performed using a grid cutter followed by a second cutting using a rotary cutter. The resulting meat analogues are essentially regular, e.g. cubical or cylindrical, or irregular, random or essentially random in shape. Optionally, they can be transferred to an inspection station for visual inspection to facilitate quality control, manual or automatic, e.g. using a digital camera and suitable image recognition software.

### d) Tearing Step

The tearing step serves to improve the visibility of the inner texture of the pieces or chunks created in the dividing step, and in particular to expose the inner fibrous texture when the material used for producing the meat analogue, i.e. the meat batter, comprises fibres.

A tearing movement is achieved by a passage of the pieces or chunks through the gap or roll nip between two counter-rotating rolls, where at least one of the rolls is provided with projections, in particular pointed projections, and where preferably both rolls are provided with pointed projections. As an example, each projection can be shaped as a pyramid having a square base area and four triangular sides. The rolls are preferably cylindrical and can have an equal diameter, for example between 150mm and 300mm. The rolls can be identical. In particular, the tearing unit of the apparatus of the invention can comprise the tearing apparatus of the invention.

The tearing step was used to be done using a hammer mill which, however, leads to a relatively high percentage of small particles ("fines"), i.e. particles being smaller than 5×5mm, being produced.

Compared to a hammer mill, the apparatus and in particular the tearing unit of the invention leads to a significantly reduced percentage of fines and to an improved visibility of the inner texture of the pieces which i.a. can be explained by the harsh treatment in a hammer mill, in particular high speeds of the pieces and impacts on hard surfaces. Also, it is considered that fine particles are at least partly re-integrated into the pieces when being passed through the roll nip.

The invention will be explained with reference to an embodiment and a drawing, where
Fig. 1 illustrates a process of the invention in general,
Fig. 2 shows a tearing unit according to the invention,
Fig.3 to 5 show different views of rolls used in the tearing device of Fig. 2.
Fig. 6a and 6b illustrate feeding test results for meat analogues prepared according to examples and comparative examples 5 to 8;
Fig. 7 shows a flow diagram of a process for the production of a meat analogue according to a special embodiment of the invention;
Fig. 8 shows a side view of a cooling unit of an apparatus according to a special embodiment of the present invention;
Fig. 9 shows a front view of the cooling unit of Fig. 8;
Fig. 10 shows a sectional view of the cooling unit of Fig. 8;
Fig. 11 shows a detail of the cooling unit of Fig. 8 at the left end of a cooling pipe contained in the cooling unit;
Fig. 12 shows a detail of the cooling pipe of the cooling unit of Fig. 8 further on the right side;
Fig. 13 shows a detail of the cooling unit of Fig. 8 at the right end of the cooling pipe;

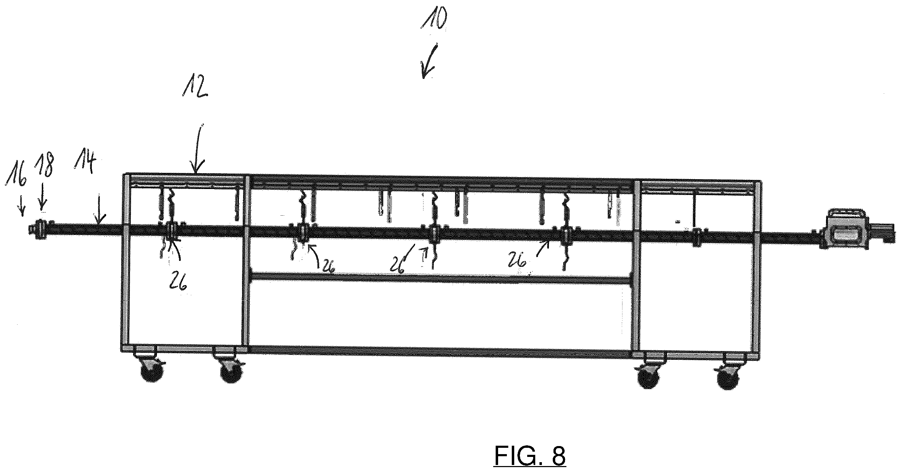

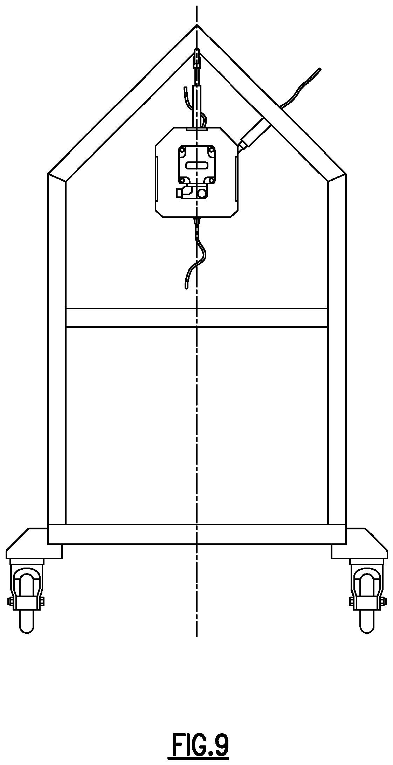

Fig. 9 shows a perspective view of the cooling unit of Fig. 8;

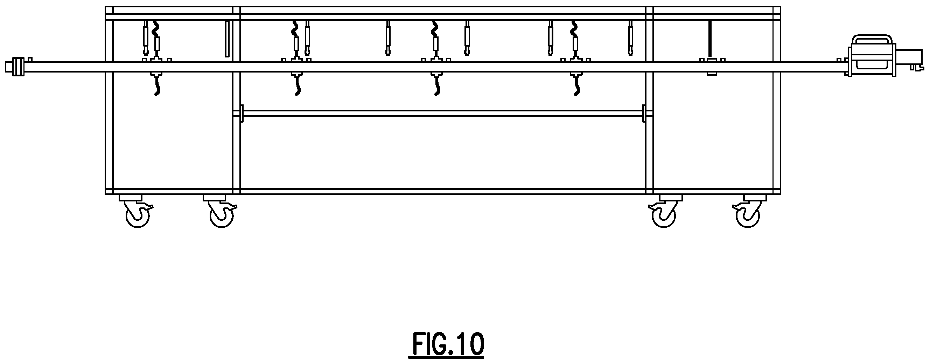

Fig. 10 shows a detail of the cooling unit of Fig. 8 at the left end of a cooling pipe contained in the cooling unit;

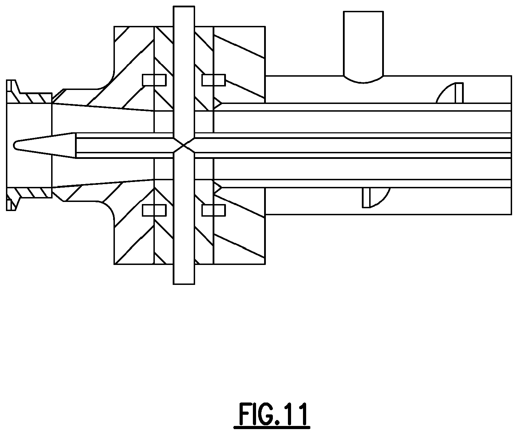

Fig. 11 shows a detail of the cooling pipe of the embodiment shown in Fig. 8; and

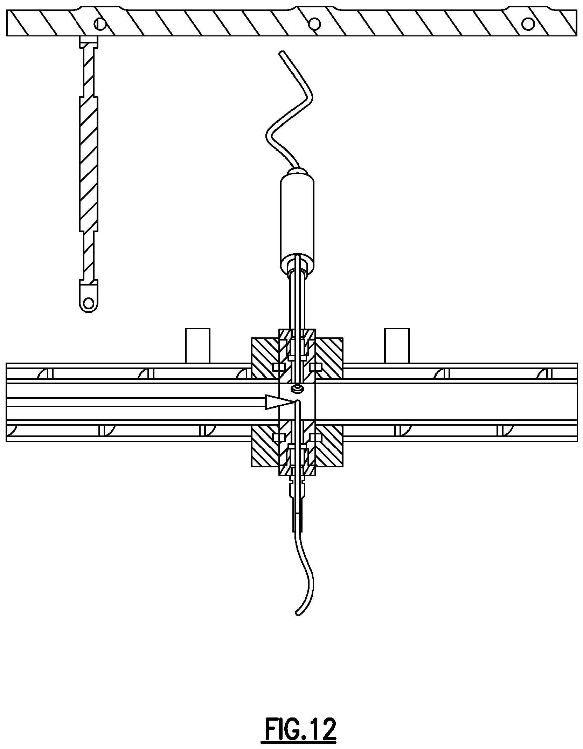

Fig. 12 shows a detail of the cooling unit of Fig. 8 at the right end of the cooling pipe.

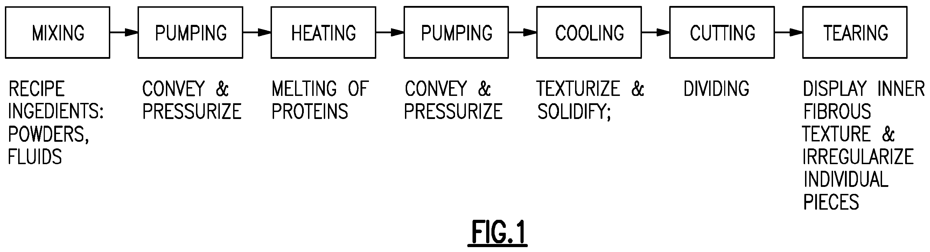

Fig. 1 shows a general overview of an embodiment of the process for producing a meat analogue according to the invention. In a mixing step, ingredients used for preparing the meat batter for a particular meat analogue, e.g. wheat gluten, (meat) emulsion and water, including various dry ingredients, are mixed. The material is conveyed and pressurised by pumping. A rotating lobe pump can be used in order to separate the mixing process from the high pressure heating process step. In the heating step, melting of proteins occurs. Pressure preferably is above 7 bar in order to avoid steam formation at temperatures up to about 160°C to 170°C.

In another pumping step, the heated material is further conveyed and pressurised, i.g. above 8 bar, towards a cooling unit. In the cooling unit, the heat treated material texturizes and solidifies. The material is cooled down below 100°C and is divided into pieces, e.g. by cutting.

In a final tearing step, the pieces or chunks of material are torn in a tearing unit in order to clearly display the inner (fibrous) texture, and to make the individual pieces less regular, i.e. so as not to have regular geometries of the pieces like cubes, cylindrical elements and so on.

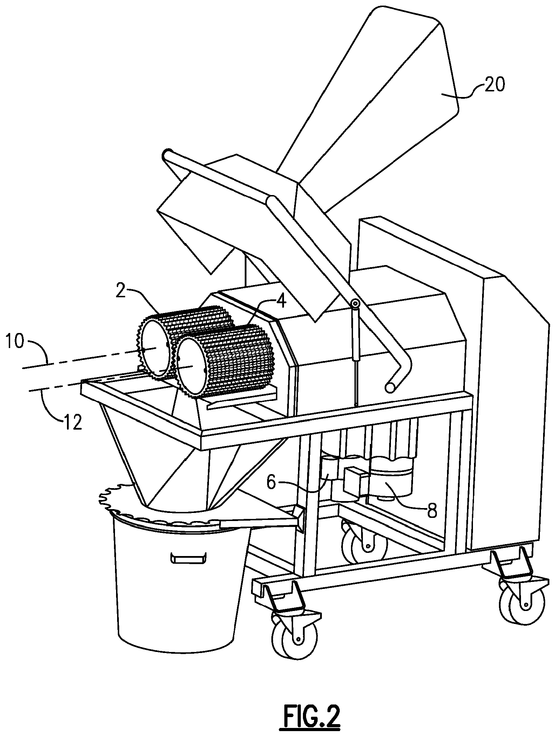

Fig. 2 shows an exemplary embodiment of a tearing unit 1. A hopper 20 for introducing the pieces to be teared is shown folded away in order to show a pair of rotatable rolls 2, 4. A first roll 2 is driven to rotate clockwise by a first electric motor 6, and a second roll 4 is driven to rotate counter-clockwise by a second electric motor 8.

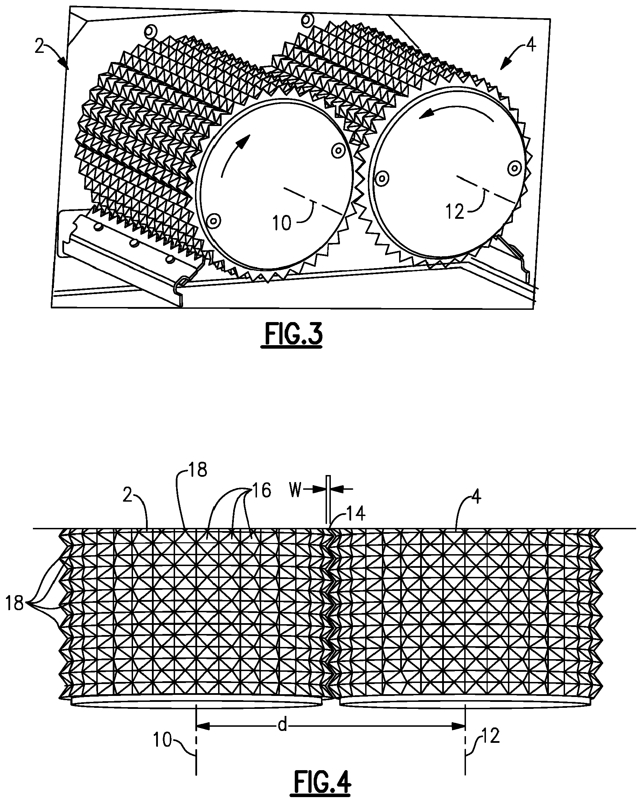

Figs. 3 to 5 show further views and details of the pair of rolls 2, 4.

Axes of rotation 10, 12 of the rolls 2, 4 are parallel to each other and arranged at a distance d from each other which is adjustable by a mechanism not shown in detail. The distance d is at least 0.1 mm, 0.2 mm, 0.5 mm or 1 mm more than a minimum distance. The minimum distance is a distance where both rolls are in touch with each other i.e. cannot be moved further towards each other, and where the width w of a roll nip 14 is a minimum, in particular zero. Preferably, the distance d is 0.2 mm more than the minimum distance, leaving a gap or a width w of the roll nip 14 of 0.2 mm.

Both rolls 2, 4 are provided with a plurality of projections 16 arranged on an outer surface of the rolls. The projections 16 are each shaped as a pyramid having a square base area and four triangular sides converging in a pointed tip 18. The projections 16 are arranged in rows parallel to the axis of rotation, and along circumferential lines, i.e. circles, perpendicularly to the direction of the rows.

The arrangement of the rollers 2, 4 is such (Fig. 4) that each circumferential line or circle of projections 16 of one roll is positioned, in an axial direction, between two adjacent circumferential lines of projections of the opposing roll so that when rotating, a meshing or interlocking rotation of the projections occurs.

When used herein, the terms "roller" and "roll" are interchangable. The rollers can be controlled to rotate at equal or different speeds. Preferably the rollers rotate at different speeds. The ratio of the revolutions per minute of the rolls, can be at least 0.01, e.g. at least 0.03, 0.1, 0.5, 0.7, 0.8, 0.9, 0.95, 0.98 or 0.99 thereby leading to a combined effect of compression and tearing (creation of shear forces). The ratio of the revolutions per minute of the rolls, is suitably from about 1:1 to about 1:91; from about 1:1 to about 1:75; from about 1:1 to about 1:50; from about 1:1 to about 1:25; from about 1:1 to about 1:10; from about 1:1 to about 1:9; from about 1:1 to about 1:8; from about 1:1 to about 1:7; from about 1:1 to about 1:6; from about 1:1 to about 1:5; from about 1:1 to about 1:4; from about 1:1 to about 1:3; from about 1:1 to about 1:2; from about 1:1 to about 1:1.5. Suitable ratios are about 1:10; 1:20; 1:30; 1:40; 1:50; 1:60; 1:70; 1:80 and 1:90. Processes in which the rollers operate at different speeds is provided, preferably the rollers operate at the above ratios. Apparatus in which the rollers can be set to operate at different speeds is also provided, preferably the rollers can be set to operate at the above ratios.

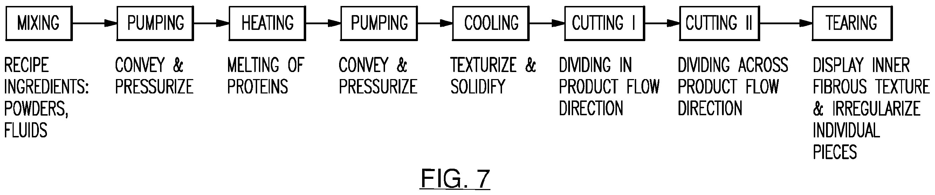

Figure 7 shows the flow diagram of a process for the production of a meat analogue according to a special embodiment of the invention. Said process comprises several steps in the order from left to right. The number and/the sequence of said steps can vary dependent on the tasks to be achieved. According to this special embodiment said process comprises mixing of recipe ingredients like powders and fluids. Thereafter the mixed recipe ingredients are conveyed and pressurized by pumping. Then by way of heating proteins are melted. By way of pumping the hot product melt is conveyed and pressurized. Thereafter the hot melt products cooled for texturization and solidification. Then the cooled-down heat-treated product is divided into pieces by cutting. The pieces are torn to provide or improve the visibility of the inner fibrous texture and to irregularize individual pieces.

Figures 8 to 11 show different views of a cooling unit of an apparatus for the production of a meat analogue according to a special embodiment of the invention. Said apparatus comprises a heating unit (not shown) operable to heat a meat better comprising protein for example by Ohmic heating, a cooling unit 30 located downstream the heating unit and operable to cool down heat-treated product obtained from the heating unit below water boiling temperature at ambient pressure when exiting the cooling unit 30, and a dividing unit (not shown) located downstream the cooling unit 30 suitable for dividing cooled down heat-treated product obtained from the cooling unit into pieces.

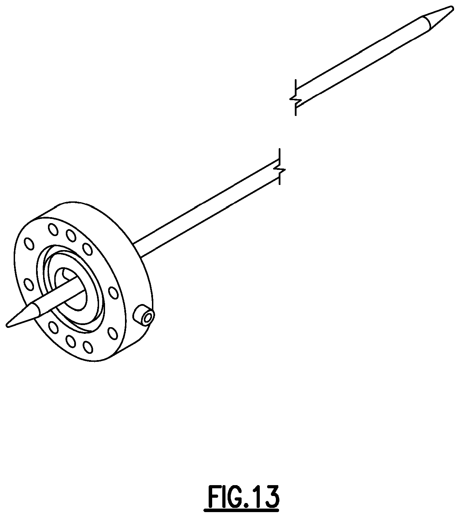

The cooling unit 30 comprises a frame 32 and a cooling pipe 34 that is supported by the frame 32. As shown in detail in Fig. 11, a feed hopper 36 is provided at the inlet end 38 of the cooling pipe 34. By way of process pumps (not shown) and the feed hopper 16 hot product melt is conveyed into the cooling pipe 34. As can be seen in figures 11 and 12, the cooling pipe 34 is a double-wall pipe. By way of the two walls an annular cross-sectional area is provided for a coolant, for example water, for outer jacket cooling of the hot product melt. The hot product melt is also cooled in the centre by way of a cooling lance 40 that extends centrally in length direction of the cooling pipe 34. In the present embodiment the cooling lance 40 does not extend over the whole length of the cooling pipe 34. The cooling lance 40 (see also Fig. 13) is mounted co-centrically within the cooling pipe 34 by way of at least one mount or support 41. The cooling pipe 34 is segmented into several coolant segments with respective coolant inlets 50 and coolant outlets 52.

As can be seen in detail in Fig. 11, in an embodiment the cooling lance 40 is divided in length direction in two passages for coolant supply and coolant return. In Fig. 11 for example there is an upper coolant inlet 42 in fluid connection with the coolant supply passage 43 and a lower coolant outlet 44 in fluid connection with the coolant return passage 45. As can be seen in more detail in Fig. 12, there might by at least one temperature and/or pressure sensor 46 for measuring the temperature and/or the pressure of the hot product melt in the cooling pipe 34. Furthermore, as can be also seen in figures 11 and 12, there is a helical-shaped guiding element 48 between the two walls of the cooling pipe 34 for guiding the coolant helically for improving the cooling by enlarging the jacket area involved in cooling. The coolant for the outer jacket cooling by way of the cooling pipe 34 and/or the coolant for the cooling lance can run in a respective coolant loop.

In the embodiment shown in figures 8 to 12 the frame 32 is like the embodiment shown in the figures 7 to 13 also provided with wheels 34 for movement of the whole cooling unit 30, but the frame is divided into three subframes 36. As can be seen in particular in Fig. 11, the cooling pipe 34 is segmented into cooling pipe segments 35. Said cooling pipe segments 35 are held together by way of holding plates 38. As can be seen in particular in figures 10 and 12, the cooling lance 40 is constructed in a different way than the cooling lance of the embodiment shown in figures 7 to 13. In particular, the coolant supply passage 43 and the coolant return passage 45 are realised by way of a pipe-in-pipe assembly.

In a special embodiment, at 250kg/h stream process pump feeds the cooling pipe. Preferably an even cooling gradient is maintained along the cooling pipe and capped constant across the cooling pipe to avoid preferential pressures and flows. This may be achieved by specifying the cooling parameters (cooling water flow and temperature per section) and a dedicated cooling pipe design. In a further special embodiment the process pump controls the system pressure of the heating unit by a control loop (PID) based on the pressure at the discharge of the heating process. Managing the pressure during cooling to avoid steam formation is important for product texture formation. Preferably the cooling pipe is designed to deliver enough cooling capacity to cool the product melt below product melting temperature and below 100°C in a consistent condition to avoid preferential flow in the cooling pipe and further cool the product below designed outlet temperature to avoid product expansion which is impacting the chunk quality.

Due to the high cooling water amount it is recommended to re-use the cooling water (for example, in circulation with retorting water) and not to waste it. Preferably the cooling pipe is supplied with at least one cooling water loop for outer jacket cooling. Preferably the process pressure of the process pump(s) is above 7 bar and between 8 and max 40 bar. A minimum pressure is required to achieve the corresponding target temperature. Preferably the cooling pipe inlet pressure is lower than 40 bar. Principally it should be equal to or greater than the process pump set point the cooling pipe inlet pressure has impact on consistence of flow. Preferably the viscosity of the hot product melt at the inlet of the cooling pipe is 10 to 15 Pas (for example the viscosity of the melt is 12 Pas at 160°C) and at the outlet of the cooling pipe the viscosity of the product is > 50 Pas or > 150 Pas or > 1000 Pas or > 5000 Pas or > 100000 Pas at temperature < 100°C. For example, at the outlet of the cooling pipe the material may be nearly solid. Preferably the velocity of the movement of the hot product melt is in a range of 2.95 m/sec to 3.25 m/sec and more preferably 3 m/sec. By way of an example the hot product melt at the inlet of the cooling pipe has a temperature in a range between 150°C and 170°C, e.g. 157°C.

The cooling pipe suitably has an outer pipe diameter of about 40 to 70mm, about 40 to 65mm, about 40 to 60mm, about 40 to 55mm, about 40 to 50mm, about 40 to 45mm, about 45 to 70mm, about 45 to 65mm, about 45 to 60mm, about 45 to 55mm, about 45 to 50mm, about 50 to 70mm, about 50 to 65mm, about 50 to 60mm, about 50 to 55mm. The cooling pipe suitably has an inner pipe diameter of less than about 100mm, less than about 90mm, less than about 80mm or less than about 70mm, e.g. suitably about about 60mm, about 55mm, about 55mm, about 50mm, about 45mm, about 40mm, about 35mm or about 30mm e.g. about 35 to 60mm, about 35 to 55mm, about 35 to 40mm, about 40 to 60mm, about 40 to 55mm, about 40 to 50mm, about 40 to 45mm, about 44 to 60mm, about 45 to 55mm, about 45 to 50mm, about 50 to 60mm, about 50 to 55mm.

The length of the cooling pipe is suitably about 2 to 10m, about 3 to 9m, about 4 to 8m or about 5 to 7m, e.g. about 3m, about 4m, about 5m, about 6m, about 7m or about 8m. The cooling lance diameter is suitably 10 to 30mm, 10 to 25mm, 10 to 20mm, 15 to 30mm, 25 to 25mm 15 to 20mm, e.g. about 15mm, about 20mm or about 25mm. The length of the cooling lance in suitably about 2 to 4m, about 2.5 to 4m, about 3 to 4m, about 3.5 to 4m, about 2 to 3.5m, about 2.5 to 3.5m, about 3 to 3.5m, about 3 to 4m, about 3.5 to 4m, e.g. about 2.5m, about 2.6m, about 2.7m, about 2.8m, about 2.9m, about 3m, about 3.1m, about 3.2m, about 3.3m, about 3.4m or about 3.5m, preferably about 3,1m.

The process (or melt) pumps, preferably lobe pumps, ensure delivering the higher pressures required for conveying the melt through the cooling pipe where it turns into a solid. Especially to manage starts after short line stops these pumps are essential.

### Reference indicators:

- 1: tear unit
- 2: first roll
- 4: second roll
- 6: first electric motor
- 8: second electric motor
- 10: axis of rotation (of 2)
- 12: axis of rotation (of 4)
- 14: roll nip
- 16: projection
- 18: tip
- 20: hopper
- 30: cooling unit
- 32: frame
- 34: cooling pipe
- 35: cooling pipe segments
- 36: feed hopper
- 38: inlet end
- 40: cooling lance
- 41: mount/support
- 42: coolant inlet
- 43: coolant supply passage
- 44: coolant outlet
- 45: coolant return passage
- 46: temperature/pressure sensor
- 48: guiding element
- 50: coolant inlet
- 52: coolant outlet
- 54: wheels
- 56: subframes
- 58: holding plates
- d: distance (between 10 and 12)
- w: width (of 14)

The invention is further illustrated by the following non-limiting examples:

### Example 1: A tearing apparatus having rollers arranged to provide a roller nip of about 0.5mm:

A tearing apparatus was constructed with two rollers arranged as shown in Figures 3 to 5. The axes of rotation 10, 12 of the rolls 2, 4 being parallel to each other and adjustably arranged to touch each other and to provide a roll nip of about 0.5 mm. The rollers 2, 4 having a plurality of projections 16 arranged on an outer surface of each roller, shaped as a pyramid having a square base area and four triangular sides converging in a pointed tip 18. The projections 16 being arranged in rows parallel to the axis of rotation, and along circumferential lines, i.e. circles, perpendicularly to the direction of the rows. The rollers 2,4 were arranged as shown in Figure 4 so that each circumferential line or circle of projections 16 of one roll was positioned, in an axial direction, between two adjacent circumferential lines of projections of the opposing roll so that when rotating, a meshing or interlocking rotation of the projections occurred. The rollers were set to rotate at different speeds. The ratio of the revolutions per minute of the rolls was set at about 1:60.

### Example 2: A process for preparing improved meat analogues using the tearing apparatus of Example 1:

The apparatus of Example 1 was used in the process shown in Figure 1 to prepare meat analogues with improved visual appearance compared to analogues prepared by the same process using the hammermill. The appearance of the meat analogues produced was closer to the appearance of real meat chunks. Analogues having a less "synthetic" appearance were produced. Moreover, the process produced material having fewer fines (very small pieces of meat analogue), which further enhanced the appearance of the product. The reduction in fines produced also improved the process by reducing the potential of the fines to interrupt the equipment. The process can therefore be performed more continuously than previously known processes and cleaning of the apparatus is more efficient.

### Example 3: A tearing apparatus having rollers arranged to provide a roller nip of about 0.7mm:

A tearing apparatus as described in Example 1 was constructed having rollers arranged to provide a gap (roll nip) of about 0.7 mm.

### Example 4: A process for preparing improved meat analogues using the tearing Example 3:

The process described in Example 2 was repeated using the apparatus of Example 3. Meat analogues were prepared having an appearance close to real meat and with even fewer fines. The product and the process were further improved over previously known processes using the hammer mill.

### Example 5

Three parts of a batter containing 90.8% meat and animal derivatives substantially based on chicken, 4.7% water, and 4.5% of at least one of vitamins, minerals, palatants, colorants, etc. (all percentages are weight percentages based on the total weight of te slurry) as to achieve a nutritionally complete cat food finished product were mixed with one part vegetable protein powder containing min. 75% protein (vital wheat gluten) to form a single solid mixture containing 30.5% crude protein, 59% moisture and 4.5% fat (all percentages of the semi-solid mixture are based on the total weight of the semi-solid mixture).

### Example 6

Three parts of a batter containing 90.8% meat and animal derivatives substantially based on tuna, 4.7% water, and 4.5% of at least one of vitamins, minerals, palatants, colorants, etc. (all percentages are weight percentages based on the total weight of the slurry) as to achieve a nutritionally complete cat food finished product were mixed with one part vegetable protein powder containing min. 75% protein (vital wheat gluten) to form a single solid mixture containing 30.5% crude protein, 59% moisture and 4.5% fat (all percentages of the semi-solid mixture are based on the total weight of the semi-solid mixture).

### Example 7

The mixtures as obtained in Example 5 and Example 6 were each fed by means of a first positive displacement pump into an Ohmic heating unit. 5 modules with a maximum electrical power of 20 kW each have been used in this heating unit. In this Ohmic heating unit, the meat batter was transferred between electrodes having a diameter of 52 mm and a length of 105 mm to result in a surface area of 171.5 cm². The average current density across the 5 modules was observed to be 650 A/m². The pressure in the heating unit was 1,200 kPa. The outlet temperature of a material from this Ohmic heating unit was between 158-160°C. The material was then directed to a cooling area by a second positive displacement pump through which its temperature was brought down to below 80°C. The solid material obtained was cut to produce meat analogues/fish analogues with internal fibrosity.

### Comparative Example 8

The mixtures of Examples 5 and were individually fed by means of a first positive displacement pump to a single heating unit comprising a single scraped surface heat exchanger (SSHE) with a volume of approximately 17 1 and a surface to volume ratio of 60 m²/m³ under 1,200 kPa product pressure. The SSHE unit was continuously supplied with steam at a temperature between 166-168°C and the shaft operated at 200 rpm-300 rpm. The outlet temperature of the material from this heating unit was between 158-160°C. The material was then directed to a cooling area by a second positive displacement pump through which its temperature was brought down to below 80°C. The solid material obtained was cut to produce meat analogues/fish analogues with internal fibrosity.

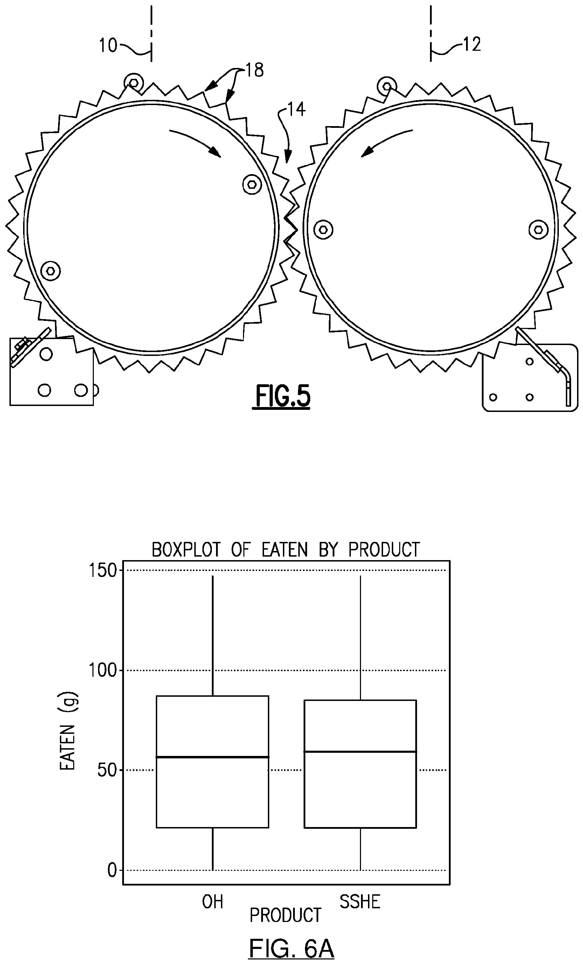

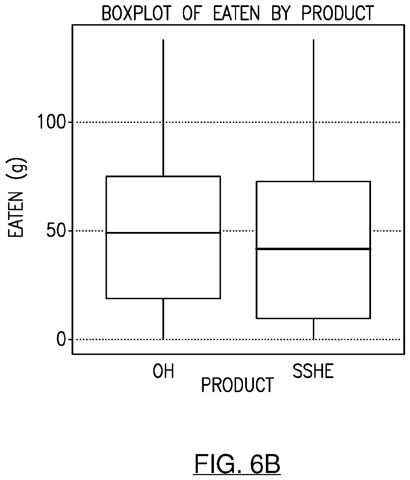

A feeding test, both for the chicken and the tuna recipe, and as prepared utilizing the Ohmic heating unit according to the invention and the scraped surface heat exchanger according to the prior art has been conducted, and the results are summarized in Fig. 6a (chicken recipe) and Fig. 6b (tuna recipe). In Fig. 6a, "OH" is the cat food prepared by Ohmic heating, while "SSHE" is the product prepared by SSHE. In Fig. 6b, "OH" is the cat food obtained by Ohmic heating, while "SSHE" is the cat food obtained by SSHE. As can be taken from both Figs. 6a and 6b, almost parity between both recipes, either prepared by Ohmic heating or SSHE, is obtained.

The present disclosure may also be described by one or more of the following numbered paragraph(s) denoted "para(s)":
1. A process for the production of a meat analogue, comprising the steps of:
   a) introducing a meat batter comprising protein into a heating unit and heating the meat batter to a temperature above the melting point of the protein to produce a heat-treated product, wherein the heating unit optionally heats the meat batter by Ohmic heating,
   b) cooling the heat-treated product by moving through a cooling unit, so that the heat-treated product has a temperature below water boiling temperature at ambient pressure when exiting the cooling unit, and
   c) dividing the cooled heat-treated product into pieces
   and optionally d) tearing the pieces by passing the pieces through a roll nip (14) between a pair of counter-rotating cylindrical rolls (2, 4) having parallel axes of rotation (10, 12), a plurality of projections (16) being arranged on an outer surface of at least one of the rolls (2, 4).
2. A process as defined in para 1 wherein the heating unit comprises at least two sections, wherein the sections are connected in series and each comprises at least one module, which modules are operable by Ohmic heating.
3. A process as defined in para 1 or para 2 wherein the heating unit comprises two sections, wherein the first section into which the meat batter is firstly introduced comprises from 1 to10 modules, and the second section, to which the meat batter is transferred from the first section, comprises from 1 to 7 modules, wherein the modules in the sections are connected in series.
4. A process for the production of a meat analogue according to any one of the preceding paras wherein 60 to 70% of the total electrical power to be applied to the meat batter in the process is applied in the first section, and 30 to 40% of the total electrical energy to be applied to the meat batter in the process is applied in the second section.
5. A process for the production of a meat analogue according to any one of the preceding paras wherein the heating in step a) is carried out with electrodes applying an electrical current density of 100-5,000 A/m², current/surface area of the electrodes, as an average electrical current density over the heating unit.
6. A process as defined in any one of the preceding paras wherein step b) comprises externally and internally cooling the heat-treated product by moving through a cooling pipe (34) of a cooling unit (30), so that the heat-treated product has a temperature below water boiling temperature at ambient pressure when exiting the cooling unit (30) and wherein the internal cooling comprises cooling by way of an inner cooling lance (40) co-centric to the outer cooling pipe (34) and wherein the external cooling optionally comprises outer jacket cooling.
7. Apparatus for the production of a meat analogue comprising:
   i) a heating unit operable to heat a meat batter comprising protein,
   ii) a cooling unit located downstream the heating unit and operable to cool down heat-treated product obtained from the heating unit below water boiling temperature at ambient pressure when exiting the cooling unit, and
   iii) a dividing unit located downstream the cooling unit suitable for dividing cooled down heat-treated product obtained from the cooling unit into pieces
   and optionally v) a tearing unit (1) for tearing the pieces, the tearing unit (1) comprising:
   a pair of rotatable rolls (2, 4) having parallel axes of rotation (10, 12) arranged at a preset distance (d) of each other,
   the distance (d) defining a width (w) of a roll nip (14) between the rolls (2, 4),
   each roll (2, 4) being coupled with a motor (6, 8) for rotating the rolls (2, 4) in a counter-rotating movement,
   a plurality of projections (16) being arranged on an outer surface of a first roll (2) of the pair of rolls (2, 4),
   a control unit for controlling the heating unit, the cooling unit, the dividing unit and the tearing unit (1).
8. Apparatus as defined in para 7 wherein the projections (16) are formed as cylinders, pointed cylinders, cones, truncated cones, pyramids or truncated pyramids, each pyramid having 3, 4, 5, 6 or more sides
   and optionally the projections are arranged in at least 1, 5, 10, 20, 40 or 50 rows parallel to the axes of rotation (10, 12) and/or along at least 1, 2, 3, 5, 10, 15 or 20 circumferential lines
   and optionally the projections (16) have a height of between 1% and 30% or between 5% and 10% of an outer diameter of the roll (2, 4)
   and optionally a cone half angle or a pyramid half angle of the projections (16) is less than 60°, 50°, 45°, 30°, 20° or 10°
   and optionally a second roll (4) of the pair of rolls (2, 4) is provided with a plurality of projections (16) on an outer surface of the roll (4) and optionally, the projections (16) are formed and arranged according to para 12
9. Apparatus according to para 7 or para 8 comprising a means for adjusting the distance (d) between the axes of rotation (10, 12) in order to adjust the width (w) of the roll nip (14).
10. Apparatus according to any one of paras 7 to 9 wherein each roll (2, 4) is derivably connected to a separate motor (6, 8), each motor (6, 8) being operable to drive the rolls (2, 4) to rotate at equal or different speeds.
11. Apparatus according to any one of paras 7 to 10 wherein the cooling unit (30) comprises a cooling lance (40) co-cencentric to the cooling pipe (34) for internal cooling and optionally wherein the cooling pipe (34) has a circular cross-section.
12. Apparatus according to any one of paras 7 to 11 wherein the cooling pipe (34) is a double-wall pipe for outer jacket cooling, wherein the outer diameter of the double-wall pipe is optionally in a range of 40 to 70mm, wherein the inner diameter of the double-wall pipe is optionally in a range of 35 to 60mm and preferably about 50 mm.
13. Apparatus according to any one of paras 7 to 12 wherein the cooling lance (20) is shorter than the cooling pipe (34).
14. Apparatus according to any one of the preceding paras , wherein the cooling lance (40) comprises a coolant supply passage (43) and a coolant return passage (45) that are in fluid communication and a coolant inlet (42) in fluid communication with the coolant supply passage (23) and a coolant outlet (24) in fluid communication with the coolant return passage (25).
15. Tearing apparatus for tearing pieces of meat analogue, comprising:
   a pair of rotatable rolls (2, 4) having parallel axes of rotation (10, 12) arranged at a preset distance (d) of each other,
   the distance (d) defining a width (w) of a roll nip (14) between the rolls (2, 4),
   each roll (2, 4) being coupled with a motor (6, 8) for rotating the rolls (2, 4) in a counter-rotating movement,
   a plurality of projections (16) being arranged on an outer surface of each roll (2, 4), the projections (16) being formed as cones, truncated cones, pyramids or truncated pyramids,
   the projections (16) being arranged in rows parallel to the axes of rotation (10, 12) and along circumferential lines,
   the rolls (2, 4) being positioned in an axial direction such that between each two adjacent circumferential lines of projections (16) of one roll (2), a circumferential line of projections (16) of the opposing roll (4) is positioned.
16. Use of a process according to any one of paras 1 to 6 and/or apparatus according to any of paras 7 to 15 in a process of preparing pet food.

## Claims

1. A process for the production of a meat analogue, comprising the steps of:
a) introducing a meat batter comprising protein into a heating unit and heating the meat batter to a temperature above the melting point of the protein to produce a heat-treated product, wherein the heating unit optionally heats the meat batter by Ohmic heating, wherein the heating unit comprises at least two sections, wherein the sections are connected in series and each comprises at least one module, which modules are operable by Ohmic heating.
b) cooling the heat-treated product by moving through a cooling unit, so that the heat-treated product has a temperature below water boiling temperature at ambient pressure when exiting the cooling unit, and
c) dividing the cooled heat-treated product into pieces

2. A process as claimed in Claim 1 wherein the heating unit comprises two sections, wherein the first section into which the meat batter is firstly introduced comprises from 1 to10 modules, and the second section, to which the meat batter is transferred from the first section, comprises from 1 to 7 modules, wherein the modules in the sections are connected in series.

3. A process for the production of a meat analogue according to any one of the preceding claims wherein 60 to 70% of the total electrical power to be applied to the meat batter in the process is applied in the first section, and 30 to 40% of the total electrical energy to be applied to the meat batter in the process is applied in the second section.

4. A process for the production of a meat analogue according to any one of the preceding claims wherein the heating in step a) is carried out with electrodes applying an electrical current density of 100-5,000 A/m², current/surface area of the electrodes, as an average electrical current density over the heating unit.

5. A process as claimed in any one of the preceding claims wherein step b) comprises externally and internally cooling the heat-treated product by moving through a cooling pipe (34) of a cooling unit (30), so that the heat-treated product has a temperature below water boiling temperature at ambient pressure when exiting the cooling unit (30) and wherein the internal cooling comprises cooling by way of an inner cooling lance (40) co-centric to the outer cooling pipe (34) and wherein the external cooling optionally comprises outer jacket cooling.

6. A process for the production of a meat analogue as claimed in any of the preceding claims, further comprising
d) tearing the pieces by passing the pieces through a roll nip (14) between a pair of counter-rotating cylindrical rolls (2, 4) having parallel axes of rotation (10, 12), a plurality of projections (16) being arranged on an outer surface of at least one of the rolls (2, 4).

7. Apparatus for the production of a meat analogue comprising:
i) a heating unit operable to heat a meat batter comprising protein, wherein the heating unit comprises at least two sections, wherein the sections are connected in series and each comprises at least one module, which modules are operable by Ohmic heating
ii) a cooling unit located downstream the heating unit and operable to cool down heat-treated product obtained from the heating unit below water boiling temperature at ambient pressure when exiting the cooling unit, and
iii) a dividing unit located downstream the cooling unit suitable for dividing cooled down heat-treated product obtained from the cooling unit into pieces

8. Apparatus as claimed in claim 7 further comprising:
iv) a tearing unit (1) for tearing the pieces, the tearing unit (1) comprising:
a pair of rotatable rolls (2, 4) having parallel axes of rotation (10, 12) arranged at a preset distance (d) of each other,
the distance (d) defining a width (w) of a roll nip (14) between the rolls (2, 4),
each roll (2, 4) being coupled with a motor (6, 8) for rotating the rolls (2, 4) in a counter-rotating movement,
a plurality of projections (16) being arranged on an outer surface of a first roll (2) of the pair of rolls (2, 4),
a control unit for controlling the heating unit, the cooling unit, the dividing unit and the tearing unit (1).

9. Apparatus as claimed in claim 8 wherein the projections (16) are formed as cylinders, pointed cylinders, cones, truncated cones, pyramids or truncated pyramids, each pyramid having 3, 4, 5, 6 or more sides
and optionally the projections are arranged in at least 1, 5, 10, 20, 40 or 50 rows parallel to the axes of rotation (10, 12) and/or along at least 1, 2, 3, 5, 10, 15 or 20 circumferential lines
and optionally the projections (16) have a height of between 1% and 30% or between 5% and 10% of an outer diameter of the roll (2, 4)
and optionally a cone half angle or a pyramid half angle of the projections (16) is less than 60°, 50°, 45°, 30°, 20° or 10°
and optionally a second roll (4) of the pair of rolls (2, 4) is provided with a plurality of projections (16) on an outer surface of the roll (4) and optionally, the projections (16) are formed and arranged according to claim 13

10. Apparatus as claimed in claim 8 or claim 9 comprising a means for adjusting the distance (d) between the axes of rotation (10, 12) in order to adjust the width (w) of the roll nip (14).

11. Apparatus as claimed in any one of claims 8 to 10 wherein each roll (2, 4) is derivably connected to a separate motor (6, 8), each motor (6, 8) being operable to drive the rolls (2, 4) to rotate at equal or different speeds.

12. Apparatus as claimed in any one of claims 8 to 11 wherein the cooling unit (30) comprises a cooling lance (40) co-cencentric to the cooling pipe (34) for internal cooling and optionally wherein the cooling pipe (34) has a circular cross-section, optionally wherein the cooling lance (20) is shorter than the cooling pipe (34).

13. Apparatus as claimed in any one of claims 8 to 12 wherein the cooling pipe (34) is a double-wall pipe for outer jacket cooling, wherein the outer diameter of the double-wall pipe is optionally in a range of 40 to 70mm, wherein the inner diameter of the double-wall pipe is optionally in a range of 35 to 60mm and preferably about 50 mm.

14. Apparatus according to any one of the preceding claims, wherein the cooling lance (40) comprises a coolant supply passage (43) and a coolant return passage (45) that are in fluid communication and a coolant inlet (42) in fluid communication with the coolant supply passage (23) and a coolant outlet (24) in fluid communication with the coolant return passage (25).

15. Use of a process according to any one of claims 1 to 6 and/or apparatus according to any of claims 7 to 14 in a process of preparing pet food.
